(19) **Europäisches Patentamt**

**European Patent Office**

**Office européen des brevets**

(11) Veröffentlichungsnummer: **0 011 746 B1**

(12) **EUROPÄISCHE PATENTSCHRIFT**

(45) Veröffentlichungstag der Patentschrift:
09.02.83

(21) Anmeldenummer: 79104383.9

(22) Anmeldetag: 08.11.79

(51) Int. Cl.³: **H 04 L 7/02**

(54) Schaltungsanordnung zum Regenerieren eines isochronen Datensignals.

(30) Priorität: 05.12.78 CH 12391/78

(43) Veröffentlichungstag der Anmeldung:
11.06.80 Patentblatt 80/12

(45) Bekanntmachung des Hinweises auf die Patenterteilung:
09.02.83 Patentblatt 83/6

(84) Benannte Vertragsstaaten:
DE FR GB IT SE

(56) Entgegenhaltungen:
US-A-3 548 309
US-A-3 668 315
US-A-3 781 696

(73) Patentinhaber: Hasler AG, Belpstrasse 23,
CH-3000 Bern 14 (CH)

(72) Erfinder: Weiss, Jürg, Dipl.-Ing., Mühlestutz 4,
CH-3150 Schwarzenburg (CH)

(74) Vertreter: Keller, Hartmut et al, Postfach 12,
CH-3000 Bern 7 (CH)

## Schaltungsanordnung zum Regenerieren eines isochronen Datensignals

Die Erfindung betrifft eine Schaltungsanordnung zum Regenerieren eines aus Daten und Datentakt bestehenden isochronen Datensignals, welches Datensignal in einem Sender durch ein plesiochrones Abtastsignal höherer Frequenz abgetastet, über eine Leitung als Folge von Abtastelementen übertragen und von einem Empfänger empfangen wird, wobei der Empfänger die im Oberbegriff von Anspruch 1 angegebenen Einheiten aufweist.

Zum Regenerieren eines übertragenen Datensignals ist stets eine Taktregeneration notwendig. Daher ist die Aufgabenstellung der Taktregeneration digitaler Zeichenelemente oder eines Datensignals aus der Literatur bekannt. Hierzu sei beispielsweise auf die schweizerische Patentschrift Nr. 604 440 verwiesen.

Zum Regenerieren übertragener Datensignale gehört weiter die phasenrichtige Abtastung des übertragenen Signals durch das regenerierte Taktsignal. Zur Einregelung der richtigen Abtastphase dient eine Phasenregelschaltung. Aus IEEE Transactions on Communications, Vol. Com-26, No. 1, January 1978, Seite 35—45 ist ein digitaler Phasenregelkreis bekannt, der für eine derartige Einregelung der Abtastphase verwendbar wäre. Er besteht aus einem Oszillator, einem variablen Teiler, einem Phasenvergleicher, einem digitalen Sequenzfilter und einer Rückkopplung vom Phasenvergleicher über das Filter zum variablen Teiler. Der Phasenvergleicher vergleicht ständig die Phase eines externen Eingangssignals mit den Phasensignalen am Ausgang des variablen Teilers. Wird hierbei eine Phasenverschiebung festgestellt, so erfolgt über die Rückkopplung ein Steuerbefehl an den variablen Teiler, einmalig sein Teilungsverhältnis zu ändern. Hierdurch wird die Phase des Teilerausgangssignals schrittweise so lange geändert, bis der Phasenvergleicher keine Phasenverschiebung mehr feststellt. Das digitale Sequenzfilter dient als Puffer, indem es nur periodisch auftretende Phasenabweichungssignale durchläßt und vereinzelte Signale nicht weiterleitet. Hierdurch wird der Einfluß vereinzelter Fehlentscheide des Phasenvergleichers auf die Phasenlage des Ausgangssignals reduziert.

Aus der Schrift US-A-3 548 309 ist ein Übertragungssystem bekannt, bei dem ein Datensignal durch ein andersfrequentes zweites Signal abgetastet und übertragen wird. Hierbei stehen die Frequenzen in keinem ganzzahligen Verhältnis, wodurch sich ein Abtastmuster ergibt. Der Empfänger besitzt einen Phasenregelkreis (phase-locked-loop), dessen regelbarer Oszillator mit einer Frequenz schwingt, die dem kleinsten gemeinsamen Vielfachen der Datensignal- und der Abtastfrequenz entspricht. Durch zwei Teiler lassen sich diese Frequenzen gewinnen. Das ursprüngliche Datensignal wird zurückgewonnen, indem das Empfangssignal mit der Datensignalfrequenz abgetastet wird. Zur Einstellung der richtigen Abtastphasenlage dienen zwei Zähler, die auf den einen, variierbaren Teiler einwirken und dabei dessen Phasenlage schrittweise verändern, und dies aufgrund der Signale eines Datenübergangsdetektors.

Die Aufgabe der Erfindung besteht nun darin, eine einfache Schaltungsanordnung anzugeben, die im Empfänger einer Datenübertragungseinrichtung ein isochrones Datensignal zu regenerieren gestattet, das im Sender mit einem hierzu plesiochronen Abtastsignal höherer Frequenz abgetastet und in Form von Abtastelementen mit dieser höheren Frequenz übertragen wurde.

Dies bedeutet, daß im Empfänger aus den ungleich langen Folgen von übertragenen Signalelementen mit gleicher Wertigkeit sowohl der Datentakt als auch die Daten des Datensignals wiedergewonnen werden. Die Schaltungsanordnung, die diese Aufgabe erfüllt, ist gekennzeichnet durch die im Anspruch 1 angegebenen Kennzeichen. Spezielle Ausführungen der Schaltungsanordnung finden sich in den weiteren Ansprüchen.

Die Schaltungsanordnung arbeitet digital. Hierdurch ergibt sich eine äußerst einfache und störungssichere Regelcharakteristik.

Im folgenden wird die Erfindung anhand von drei Figuren beispielsweise näher beschrieben. Es zeigt

Fig. 1 einfaches Blockschaltbild einer Übertragungseinrichtung,

Fig. 2 Schaltungsanordnung zum Regenerieren des Datentaktes und des Datensignals,

Fig. 3 Zeitdiagramme von Signalen, die in Fig. 1 und Fig. 2 auftreten.

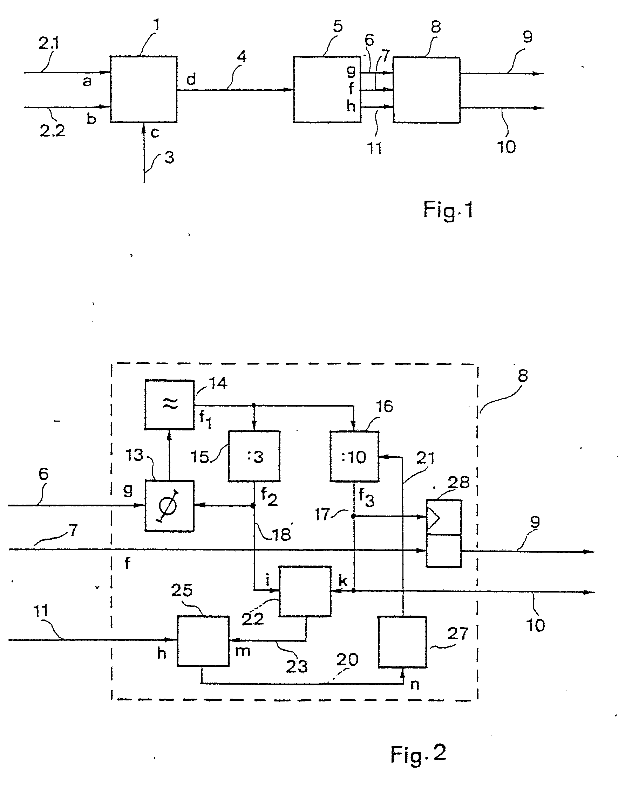

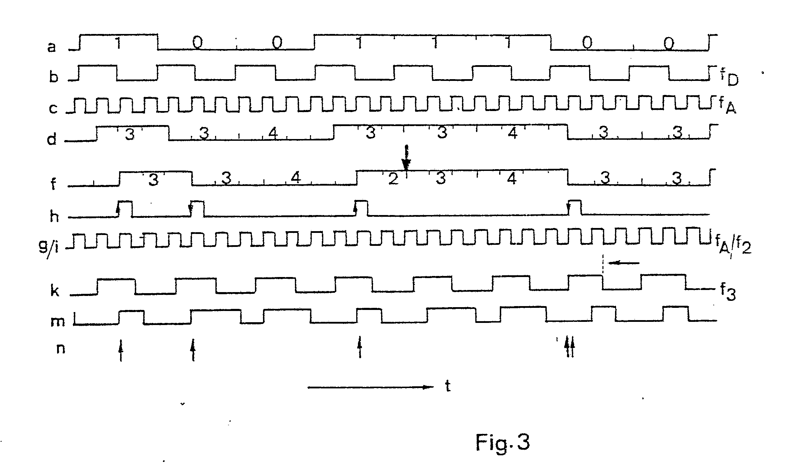

Fig. 1 zeigt ein einfaches Blockschaltbild einer Übertragungseinrichtung. 1 ist ein Sender mit drei Eingängen 2.1, 2.2, 3 und einem Ausgang, der mit einer Übertragungsleitung 4 verbunden ist. Über die Eingänge 2 werden isochrone Datensignale einer Taktfrequenz $f_D$, beispielsweise der Frequenz 9,6 kBit/s, sowie der zugehörige Datentakt von 9,6 kHz eingegeben. Über den dritten Eingang 3 erfolgt die Eingabe eines Abtastsignals. Dieses weist eine zweite, höhere Taktfrequenz $f_A$ auf und dient zur Abtastung des Datensignals von Leitung 2.1. Die zweite Frequenz $f_A$ sei beispielsweise 32 kHz und $3 \cdot f_A$ sei plesiochron zu $10 \cdot f_D$.

In Fig. 3a ist als Beispiel eine Bitfolge 10011100 des Datensignals in Ziffern und als Diagramm dargestellt (Zeitskala t von links nach rechts). Zugehörig hierzu ist der Datentakt $f_D$ entsprechend Fig. 3b mit konstanten Grundlängen $1/f_D$. Fig. 3c zeigt das Abtastsignal der Frequenz $f_A$. Die durch die Abtastung im Sender 1 entstehende Folge von Abtastelementen der kürzeren Grundlänge $1/f_A$ gibt Fig. 3d wieder. Die Ziffern veranschaulichen, daß sich durch die Abtastung mit der Frequenz $f_A$, die kein ganzzahliges Vielfaches der Frequenz $f_D$ ist, ein periodisches

Abtastmuster ergibt, indem abwechselnd eine unterschiedliche Zahl von Abtastelementen der Grundlänge $1/f_A$ einem Signalelement der Grundlänge $1/f_D$ des Datensignals entspricht. Im gewählten Beispiel zeigt das Abtastmuster die Folge 3-3-4.

Die Folge der Abtastelemente (Fig. 3d) wird vom Sender 1 auf die Übertragungsleitung 4 ausgegeben. Diese Leitung kann beliebig ausgebildet sein. Sie kann die Datenelemente und den Datentakt auf einer gemeinsamen Ader oder auf getrennten Adern übertragen. Der Empfänger 5 empfängt die Signale und regeneriert mittels eines bekannten ersten Regelkreises die Übertragungstaktfrequenz (Fig. 3g), die identisch ist mit der Abtastfrequenz $f_A$, und die Folge der übertragenen Abtastelemente (Fig. 3f). Weiter stellt der Empfänger 5 fest, wann Datenübergänge in der übertragenen Folge auftreten (Fig. 3h). Diese Wechsel entsprechen den Flanken des Datensignals von Fig. 3a. In den Fig. 3f, 3g und 3h sind diese vom Empfänger 5 ermittelten Signale dargestellt.

Die detektierten Datenübergänge haben Abstände, die bei fehlerfreier Übertragung dem Abtastmuster entsprechende Kombinationen von 3 und 4 Grundlängen $1/f_A$ der Abtastfrequenz entsprechen, nämlich 3, 4, 6, 7, 10, 13 usw. Grundlängen. Zur Wiederherstellung des isochronen Datensignals besteht nun die Aufgabe, diese variierende, dem Abtastmuster und dem Datensignal entsprechende Datenfolge (Fig. 3h) in eine Folge umzuwandeln, bei der die Flankenabstände ganzzahlige Vielfache der Grundlänge $1/f_D$ des Datensignals sind. Dies bedeutet die Regenerierung des isochronen Datentaktes $f_D$. Erschwert wird diese Aufgabe dadurch, daß die Regeneration des Datensignals auch dann gewährleistet sein muß, wenn das Abtastmuster durch Synchronisationsfehler (Bitslips) oder durch Übertragungsfehler vereinzelt gestört wird. Synchronisationsfehler entsprechen Einschiebungen oder Auslassungen einer Grundlänge $1/f_A$ und verlängern oder verkürzen damit die Übertragungsfolge um eine Grundlänge. Dies wird beispielsweise in Fig. 3f durch einen Pfeil und durch Auslassung einer Grundlänge $1/f_A$ angedeutet.

Eine Schaltungsanordnung 8 löst die obenerwähnte Aufgabe unter Verwendung der über die Leitungen 6, 7 und 11 ankommenden regenerierten Taktfrequenz $f_A$, der Folge der regenerierten, übertragenen Abtastelemente und der ermittelten Datenübergänge dieser Folge. Die Schaltungsanordnung 8 besitzt zwei Ausgänge 9 und 10, an denen das regenerierte, isochrone Datensignal und dessen Datentakt $f_D$ abgreifbar sind.

Fig. 2 zeigt die Schaltungsanordnung 8 zum Regenerieren des Datentaktes $f_D$ und des Datensignals. Entsprechend Fig. 1 wird über die Leitung 6 die Taktfrequenz $f_A$ eingegeben, über die Leitung 7 die Folge der Abtastelemente und über die Leitung 11 die Datenübergänge.

13 ist ein Phasenvergleicher, 14 ein steuerbarer Oszillator und 15 ein erster Teiler. Diese drei Einheiten bilden zusammen in Art eines Phasenregelkreises (Phase-locked-loop) einen Frequenzerzeugerkreis. Über die Leitung 6 wird dem Phasenvergleicher die Taktfrequenz $f_A$ eingegeben. Der Oszillator 14 schwingt, geregelt durch die vom Phasenvergleicher abgegebene Spannung, mit einer Frequenz $f_1$, die beispielsweise um den Faktor 3 höher ist als die Frequenz $f_A$. Am Ausgang 18 des ersten Teilers 15 ergibt sich bei einem Teilungsverhältnis entsprechend dem vorerwähnten Faktor 3 ein Signal mit der Frequenz $f_2$, die gleich ist der Frequenz $f_A$.

Der Ausgang des Oszillators 14 ist weiter mit einem zweiten Teiler 16 verbunden, dessen Teilungsverhältnis so gewählt ist, daß an seinem Ausgang 17 ein Signal mit der Frequenz $f_3$ entsteht, die gleich ist der Datentaktfrequenz $f_D$.

Die Frequenz $f_1$ ist damit ein gemeinsames Vielfaches der Frequenzen $f_A$ und $f_D$ bzw. $f_2$ und $f_3$. Ist $f_1$ das kleinste gemeinsame Vielfache, so ergibt sich $f_1 = 96 \text{ kHz}$ für die beispielsweise gewählten Frequenzen $f_D = 9,6 \text{ kHz}$ und $f_A = 32 \text{ kHz}$.

Der zweite Teiler 16 besitzt ein variables Teilungsverhältnis, das durch Steuersignale einer mit ihm verbundenen Steuerleitung 20, 21 beeinflußbar ist. Im allgemeinen beträgt das Teilungsverhältnis $1 : n$. Durch ein Signal auf Leitung 20, 21 kann dieses Normteilungsverhältnis jedoch einmalig um einen festen Betrag, beispielsweise um 1, erhöht oder erniedrigt werden. Mit anderen Worten bedeutet dies, daß der im Teiler 16 enthaltene Zähler, ausgelöst durch ein Steuersignal, einmalig statt bis zu einem Endzählwert $n$ entweder bis $(n+1)$ oder nur bis $(n-1)$ zählt.

Die Ausgänge 18 und 17 der beiden Teiler 15 und 16 sind mit einem Abtaster 22 verbunden. Dieser Abtaster tastet das Ausgangssignal des zweiten Teilers 16 (Fig. 3k) durch das Ausgangssignal des ersten Teilers 15 (Fig. 3i) ab. Dieser Vorgang ist ähnlich dem Abtasten des Datensignals im Sender 1. Am Ausgang 23 der Abtasteinheit 22 entsteht ein Mustersignal (Fig. 3m). Die einen Flanken des Mustersignals, beispielsweise die positiven Flanken, haben periodisch wechselnde Abstände, die einer unterschiedlichen Zahl von Grundlängen $1/f_2$ bzw. $1/f_A$ entsprechen. Mit den gewählten Frequenzen entspricht dies einem Abtastmuster 3-3-4. Damit entsprechen die positiven Flanken des Mustersignals den Flanken des Abtastmusters, welches durch den Sender 1 erzeugt wird. Fig. 3m zeigt das Mustersignal auf Leitung 23. Die positiven Flanken des Mustersignals geben die Zeitpunkte an, zu denen Datenübergänge auf Leitung 11 zu erwarten sind.

25 ist ein zweiter Phasenvergleicher, dessen Eingänge mit den Leitungen 11 und 23 verbunden sind. Der Phasenvergleicher 25 entscheidet jeweils innerhalb eines vorgegebenen Vergleichsintervalls, ob ein Datenübergang vor oder nach einer positiven Flanke des Mustersignals oder gleichzeitig mit dieser erscheint. Über die Steuerleitungen 20, 21 wird bei Nicht-Gleichzeitigkeit an den variablen Teiler 16 ein Steuersignal abgegeben, welches das Teilungsverhältnis des Teilers 16 in der besprochenen Weise einmalig verändert. Tritt auf Leitung 11 innerhalb des Vergleichsintervalls kein Datenübergang auf, so erscheint auf den Leitungen 20, 21 kein Steuersignal.

Die Schaltungsanordnung 8 arbeitet als Regenerator des Datensignals und als digitaler Phasenregler. Durch den Oszillator 14, die Teiler 15 und 16 sowie den Abtaster 22 wird ein Mustersignal erzeugt, dessen positive Flanken Abstände aufweisen, die dem Abtastmuster beim Sender 1 entsprechen. Durch den Phasenvergleich im Phasenvergleicher 25 ergeben sich Steuersignale, die jeweils durch einmalige Änderung des Teilungsverhältnisses im Teiler 16 Phasenverschiebungen der positiven Flanken des Mustersignals in Schritten von $1/f_1$ bewirken. Die schrittweisen Phasenverschiebungen wiederholen sich so lange, bis die Datenübergänge von Leitung 11 stets gleichzeitig mit den positiven Flanken von Leitung 23 auftreten. Dies ist der gewünschte eingeregelte Zustand.

Tritt während der Übertragung durch einen Synchronisationsfehler (Bitslip) eine Bitverschiebung auf, so macht sich das dadurch bemerkbar, daß der Phasenvergleicher 25 regelmäßig wiederholt eine Phasenabweichung in einer Richtung feststellt. Ein digitales Sequenzfilter 27, das in die Steuerleitung 20, 21 eingefügt ist, unterscheidet Steuersignale, die durch vereinzelte fehlerhafte Datenübergänge hervorgerufen werden, von regelmäßig wiederholten Steuersignalen, die aufgrund einer Bitverschiebung entstehen. Hierzu prüft das Filter, ob während eines vorbestimmten Zeitintervalls mehrere oder nur ein Steuersignal über die Leitung 20 ankommt. Wenn auf Leitung 20 regelmäßig Steuersignale gleicher Sorte auftreten, so gibt das Filter 27 diese auf die Leitung 21 aus. Vereinzelte Steuersignale dagegen werden nicht weitergegeben. Dies bringt den Vorteil, daß nicht jede Abweichung sofort zu einer Regelbewegung führt. Hierdurch wird der Einfluß von Übertragungsfehlern wirksam unterdrückt.

Fig. 3 zeigt ein Beispiel für den Regelvorgang. Zu dem durch einen Pfeil in Fig. 3f gegebenen Zeitpunkt wird in der Folge der übertragenen Abtastelemente ein Element ausgelassen. Hierdurch verschiebt sich jeder nachfolgende Datenübergang um eine Grundlänge $1/f_A$. Im Beispiel der Fig. 3f ergeben sich somit folgende Abstände zwischen den Datenübergängen (von links nach rechts): 3, 7, 9, 6 usw. Grundlängen $1/f_A$. Im eingeregelten Zustand treten die positiven Flanken des Mustersignals (Fig. 3m) stets gleichzeitig mit den Bitwertigkeitswechseln (Fig. 3h) auf. Dies wird in Fig. 3n durch einfache Pfeile dargestellt. Nach der Auslassung des Abtastelements erscheint der nächste Datenübergang zeitlich vor dem zugehörigen Flankensignal. Dies wird als Phasenabweichung erkannt und in Fig. 3n durch einen Doppelpfeil dargestellt. Die Phasenabweichung löst in der beschriebenen Weise ein Steuersignal auf der Leitung 20, 21 aus (das Filter 27 wird im Moment nicht berücksichtigt). Im Zähler 16 wird hierdurch das Teilungsverhältnis verändert, wodurch ein Flankenabstand des Ausgangssignals des zweiten Teilers 16 um $1/f_1$ verkürzt wird. Dies ist in Fig. 3k durch einen waagrechten Pfeil angedeutet.

Durch die beschriebene Änderung des Signals auf Leitung 17 ergibt sich im Mustersignal auf Leitung 23 ein Sprung des Abtastmusters 3-3-4. Im zeitlichen Verlauf der Phasenwiedereinregelung wechseln zeitgleiches und zeitverschiedenes Auftreten von Datenübergängen und Mustersignal-Flanken ab. Jedes zeitverschiedene Auftreten führt zu einem weiteren Regelschritt, wodurch schließlich wiederum ein eingeregelter, phasenrichtiger Zustand erreicht wird.

Wie beschrieben, dienen zwei unterschiedliche Steuersignale zur Veränderung des Teilungsverhältnisses von Teiler 16. Das eine Steuersignal erhöht und das andere Steuersignal erniedrigt das Teilungsverhältnis 1 : n. Hierdurch ergibt sich ein Regelvorgang, der nach einer Elementauslassung oder -einschiebung in drei Einzelschritten die richtige Phasenlage wieder herstellt. Jeder Einzelschritt wird dabei ausgelöst durch einen Datenübergang. Hierdurch hängt die Dauer eines vollständigen Regelvorgangs von der Häufigkeit der Datenübergänge ab.

Varianten der Schaltungsanordnung können darin bestehen, daß für jedes Steuersignal das Teilungsverhältnis um mehr als 1, beispielsweise um den Wert 3 von n auf n − 3 bzw. n + 3 geändert wird. Hierdurch verändert sich die Regelgeschwindigkeit. Eine andere Variante besteht darin, daß grundsätzlich nur nach einer Seite geregelt wird. Aufgrund der Periodizität des Abtastmusters 3-3-4 ist es möglich, das Teilungsverhältnis ständig in der gleichen Richtung zu verändern und bei genügend häufiger Wiederholung so die richtige Phasenlage wieder zu erreichen. Während des Regelprozesses treten hierbei allerdings Fehler im regenerierten Datensignal auf, was eigentlich vermieden werden sollte. Statt der seriellen Steuerleitungen 20, 21, auf der zwei verschiedene Steuersignale verwendet werden, können natürlich auch zwei getrennte Steuerleitungen vorgesehen werden, die den zwei Sorten Steuersignalen zugeordnet sind.

Das digitale Sequenzfilter 27 ist in einer bevorzugten Ausführung ein Schieberegister, dessen Inhalt durch jedes Steuersignal auf Leitung 20 weitergeschoben wird und das in regelmäßigen Abständen oder nach jeder ausgeführten Korrektur in die Grundstellung zurückgestellt wird. Es gibt nur dann Signale auf die Leitung 21 aus, wenn zwischen zwei Rückstellungen eine den Registerplätzen entsprechende Anzahl Steuersignale einer Sorte ankommt oder beim Auftreten beider Sorten entsprechend überwiegt. Statt der genannten Rückstellung in regelmäßigen Abständen kann in Perioden phasenrichtigen Arbeitens das Schieberegister auch schrittweise in die Rückstell-Stellung zurückgebracht werden.

Die Schaltungsanordnung 8 ist in der Lage, auch dann einwandfrei zu arbeiten, wenn das Datensignal eine Taktfrequenz $f'_D$ aufweist, die um den Faktor 2 oder 4 oder 8 usw. gegenüber der Taktfrequenz $f_D$ verringert ist. Für diese neuen langsameren Taktfrequenzen $f'_D$ und die unveränderte Abtastfrequenz $f_A$ ist $f_1$ ebenfalls ein gemeinsames Vielfaches. Die Abtasteinheit 22 erzeugt in diesen Fällen ein unverändertes Abtastmuster 3-3-4, welches nun nicht mehr mit dem vom Sender 1 erzeugten Abtastmuster übereinstimmt. Da jedoch jeder zweiten (bzw. vierten usw.) positiven Flanke des Mustersignals im ungestörten Fall jeweils kein Datenübergang entspricht, und da dies jeweils zu keinem Steuersignal führt, ergibt sich eine Wirkung, als ob nur jede zweite (vierte usw.) Mustersignal-Flanke erzeugt würde. Dies entspricht dann einem Abtastmuster 6-7-7 (bzw. 13-13-14 usw.), wie es beim entsprechenden Abtastvorgang im Sender 1 erzeugt wird.

Zum Regenerieren des Datensignals dient die Einheit 28. Diese Einheit ist ein Flip-Flop, dessen D-Eingang mit der Leitung 7 und dessen Takt-Eingang mit der Leitung 17 verbunden ist. Über den Takt-Eingang erfolgt damit periodisch mit der Frequenz $f_3$ die Abtastung der regenerierten Folge von Abtastelementen. Im eingeregelten Zustand liegt die Abtastphase so, daß unabhängig vom Abtastmuster und der Reihenfolge der Abtastelemente jeweils Abtastwerte erhalten werden, die den Werten des Datensignals beim Sender 1 entsprechen.

Tritt durch einen Synchronisationsfehler (Bitslip) eine Bitverschiebung auf, so ergibt sich hierdurch eine Phasenverschiebung zwischen den Mustersignal-Flanken und den Datenübergängen. Hierdurch kommt die relative Abtastphase beim gewählten Beispiel in einen kritischen Abtastbereich. Es treten bei der Abtastung zwar keine Fehler auf, jedoch würde ein zweiter Synchronisationsfehler zu einem fehlerhaften Datensignal führen, wenn zwischenzeitlich nicht die Soll-Phasenlage wieder eingeregelt würde. Das abgetastete Signal erscheint als neues Datensignal auf Leitung 9. Der dazugehörige Datentakt kann Leitung 10 entnommen werden, die den Ausgang der Leitung 17 darstellt.

Die genaue Beschreibung der technischen Ausgestaltung der Einheiten 22 und 25 erübrigt sich. Diese Einheiten sind im wesentlichen D-Flip-Flops, deren Beschaltung aus der Literatur bekannt ist.

Die Schaltungsanordnung arbeitet bis auf den Oszillator 14 und dessen nicht gezeigte Ansteuerung rein digital. Sie ist mit einfachen, kommerziell erhältlichen Bausteinen aufbaubar und bedarf keiner Justierarbeit. Sie ist unempfindlich gegen vereinzelte Störungen, regelt vereinzelte Synchronisationsfehler verhältnismäßig schnell aus und verharrt im störungsfreien Fall konstant in der Einregelphase. Hiermit erfüllt sie alle Forderungen, die entsprechend der Beschreibungseinleitung an die Schaltungsanordnung gestellt werden.

**Patentansprüche**

1. Schaltungsanordnung (8) zum Regenerieren eines aus Daten (Fig. 3, Signal a) und Datentakt (Fig. 3, Signal b) mit Taktfrequenz $f_D$ bestehenden isochronen Datensignals, welches in einem Sender durch ein hierzu plesiochrones Abtastsignal (Fig. 3, Signal c) mit höherer Taktfrequenz $f_A$ abgetastet wird, über eine Leitung (4) als Folge von Abtastelementen (Fig. 3, Signal d) mit dieser Frequenz ($f_A$) übertragen und von einem Empfänger (5) empfangen wird, wobei dieser Empfänger folgende Einheiten aufweist:
- einen Regeneratorkreis zum Regenerieren der Abtastelemente (Fig. 3, Signal f),
- einen Detektor zum Feststellen von Datenübergängen der Abtastelemente (Fig. 3, Signal h),
- einen Regenerator für den Datentakt (Fig. 3, Signal g);

und wobei die Schaltungsanordnung (8), die mit dem Empfänger (5) verbunden ist, folgende Einheiten aufweist:
- einen Frequenzerzeugerkreis, bestehend aus einem steuerbaren Oszillator (14) zur Erzeugung eines Taktsignals mit Taktfrequenz $f_1$, aus einem ersten Teiler (15) mit einem konstanten Teilungsverhältnis zur Erzeugung eines ersten Taktsignals (Fig. 3, Signal i) mit Taktfrequenz $f_2$, aus einem zweiten Teiler (16) mit einem steuerbaren Teilungsverhältnis zur Erzeugung eines zweiten Taktsignals (Fig. 3, Signal k) mit Taktfrequenz $f_3$, wobei die Taktfrequenz $f_2$ der höheren Taktfrequenz $f_A$ und die Taktfrequenz $f_3$ der Taktfrequenz $f_D$ entspricht und wobei die Taktfrequenz $f_1$ dem kleinsten gemeinsamen Vielfachen der Datentaktfrequenz ($f_D$) und der Frequenz ($f_A$) des Abtastsignals entspricht, sowie aus einem ersten Phasenvergleicher (13) für die Vergleichung des Datentaktes (Fig. 3, Signal g) mit dem ersten Taktsignal (Fig. 3, Signal i) zur Erzeugung eines Steuersignals für den Oszillator (14),
- einen Steuereingang (21) des zweiten Teilers (16) zur Eingabe von Steuersignalen, aufgrund derer einzelne Taktsegmente des zweiten Taktsignals mit Frequenz $f_3$ jeweils um einen festen Betrag in der Länge variierbar sind,
- einen Ausgangskreis (28), in dem das zweite Taktsignal die regenerierten Abtastelemente (Fig. 3, Signal f) abtastet, und an dessen Ausgang (9) bei richtiger Abtastphasenlage das regenerierte Datensignal abgreifbar ist; gekennzeichnet
- durch einen mit den Ausgängen der Teiler (15, 16) verbundenen Abtaster (22), der das zweite Taktsignal (Fig. 3, Signal k) durch das erste Taktsignal (Fig. 3, Signal i) abtastet, wodurch sich an seinem Ausgang (23) ein Mustersignal (Fig. 3, Signal m) ergibt, dessen eine Flanken die Zeitpunkte bezeichnen, zu denen Datenübergänge der Abtastelemente zu erwarten sind,

- durch einen zweiten Phasenvergleicher (25), dessen einer Eingang (23) mit dem Abtaster (22), dessen zweiter Eingang (11) mit dem Detektor zum Feststellen der Datenübergänge der Abtastelemente und dessen Ausgang (20) mit wenigstens einem Steuereingang (21) des zweiten Teilers (16) verbunden ist, und der innerhalb eines vorbestimmten Phasenbereichs ständig prüft, ob die Datenübergänge der Abtastelemente (Fig. 3, Signal k) phasengleich mit den Mustersignalflanken (Fig. 3, Signal m) auftreten und der bei jeder Phasenabweichung ein Steuersignal an den zweiten Teiler (16) abgibt.

2. Schaltungsanordnung nach Anspruch 1, dadurch gekennzeichnet, daß der zweite Teiler (16) ein Zähler ist, dessen Endzählwert um 1 variierbar ist.

3. Schaltungsanordnung nach Anspruch 1, dadurch gekennzeichnet, daß der Abtaster (22) ein D-Flip-Flop ist.

4. Schaltungsanordnung nach Anspruch 1, dadurch gekennzeichnet, daß der Phasenvergleicher (25) beim Auftreten einer Phasenabweichung in der einen Richtung ein erstes und beim Auftreten einer Phasenabweichung in der anderen Richtung ein zweites Steuersignal an einen Steuereingang (21) des zweiten Teilers abgibt.

5. Schaltungsanordnung nach Anspruch 1, dadurch gekennzeichnet, daß der Phasenvergleicher (25) beim Auftreten einer Phasenabweichung in der einen Richtung ein erstes Steuersignal auf einen ersten Steuereingang und beim Auftreten einer Phasenabweichung in der anderen Richtung ein zweites Steuersignal auf einen zweiten Steuereingang des zweiten Teilers (16) abgibt.

6. Schaltungsanordnung nach Anspruch 1, dadurch gekennzeichnet, daß der Phasenvergleicher (25) Phasenabweichungen innerhalb eines Phasenbereiches registriert, der einer Grundlänge (1/f_D) des Datentaktes (f_D) entspricht.

7. Schaltungsanordnung nach Anspruch 1, dadurch gekennzeichnet, daß zwischen dem Ausgang (20) des Phasenvergleichers (25) und dem Steuereingang (21) des zweiten Teilers (16) ein Sequenzfilter (27) eingeschoben ist, welches vereinzelte Steuersignale nicht weiterleitet und welches innerhalb eines vorbestimmten Zeitintervalls mehrfach auftretende Steuersignal weiterleitet.

**Claims**

1. A circuit arrangement (8) for regenerating an isochronous data signal which consists of data (Fig. 3, signal a) and data timing (Fig. 3, signal b) having the timing frequency f_D and which is scanned in a transmitter by a scanning signal (Fig. 3, signal c) which is plesichronous for same and which has a higher timing frequency f_A, is transmitted by way of a line (4) as a sequence of scanning elements (Fig. 3, signal d) with this frequency (f_A) and is received by a receiver (5), in which respect this receiver has the following units:

- a regenerator circuit for regenerating the scanning elements (Fig. 3, signal f),
- a detector for determining data transitions of the scanning elements (Fig. 3, signal h),
- a regenerator for the data timing (Fig. 3, signal g);

and in which respect the circuit arrangement (8) which is connected to the receiver (5) has the following units:

- a frequency generator circuit consisting of a controllable oscillator (14) for generating a timing signal having the timing frequency f_1 of a first divider (15) with a constant ratio of division for generating a first timing signal (Fig. 3, signal i) having the timing frequency f_2, and of a second divider (16) with a controllable ratio of division for generating a second timing signal (Fig. 3, signal k) having the timing frequency f_3, in which respect the timing frequency f_2 corresponds to the higher timing frequency f_A and the timing frequency f_3 corresponds to the timing frequency f_D and in which respect the timing frequency f_1 corresponds to the least common multiple of the data timing frequency (f_D) and of the frequency (f_A) of the scanning signal, as well as of a first phase comparator (13) for comparing the data timing (Fig. 3, singal g) with the first timing signal (Fig. 3, signal i) for generating a control singal for the oscillator (14),
- a control input (21) of the second divider (16) for the input of control signals, by reason of which individual timing segments of the second timing signal having the frequency f_3 are in each case variable in length by a fixed amount,
- an output circuit (28) in which the second timing signal scans the regenerated scanning elements (Fig. 3, signal f) and at the output (9) of which (28), upon correct scanning phase relationship, the regenerated data signal is tappable;

characterised

- by a scanner (22) which is connected to the outputs of the dividers (15, 16) and which scans the second timing signal (Fig. 3, signal k) in relation to the first timing signal (Fig. 3, signal i), whereby there ensues at its output (23) a master signal (Fig. 3, signal m), flanks of which designate the points in time at which data transitions of the scanning elements are to be expected,
- by a second phase comparator (25), a first input (23) of which is connected to the scanner (22), a second input (11) of which is connected to the detector for determining the data transitions of the scanning elements, and the output (20) of which is connected to at least one control input (21) of the second divider (16), and which within a predetermined phase region constantly checks whether the data transitions of the scanning elements (Fig. 3, signal k) occur in-phase with the master signal flanks (Fig. 3, signal m) and which, upon each phase deviation, delivers a control signal to the second divider (16).

2. A circuit arrangement as claimed in claim 1, characterised in that the second devider (16) is a counter the end counting value of which is variable by 1.

3. A circuit arrangement as claimed in claim 1, characterised in that the scanner (22) is a D-flip-flop.

4. A circuit arrangement as claimed in claim 1, characterised in that the phase comparator (25), upon occurrence of a phase deviation in the one direction, delivers a first control signal and, upon the occurrence of a phase deviation in the other direction, delivers a second control signal to a control input (21) of the second divider.

5. A circuit arrangement as claimed in claim 1, characterised in that the phase comparator (25), upon occurrence of a phase deviation in the one direction, delivers a first control signal to a first control input and, upon the occurrence of a phase deviation in the other direction, delivers a second control signal to a second control input of the second divider (16).

6. A circuit arrangement as claimed in claim 1, characterised in that the phase comparator (25) registers phase deviations within a phase region which corresponds to a basic length ($1/f_D$) of the data timing ($f_D$).

7. A circuit arrangement as claimed in claim 1, characterised in that interposed between the output (20) of the phase comparator (25) and the control input (21) of the second divider (16) is a sequence filter (27) which does not pass on sporadic control signals, but which passes on control signals which occur repeatedly within a predetermined interval of time.

## Revendications

1. Circuit (8) pour la régénération d'un signal de données isochrome, constitué par des données (figure 3, signal a) et un rythme de données (figure 3, signal b) avec la fréquence $f_D$, qui est échantillonné dans un émetteur par un signal d'échantillonnage (figure 3, signal c) qui lui est plésiochrone, avec une fréquence de rytheme plus élevée $f_A$, est transmis par l'intermédiaire d'une ligne (4) sous la forme d'une séquence d'échantillons (figure 3, signal d) avec cette fréquence ($f_A$) et est reçu par un récepteur (5), ce récepteur comportant les unités suivantes:

— un circuit régénérateur pour la régénération des échantillons (figure 3, signal f),
— un détecteur pour · la détermination de transitions entre données des échantillons (figure 3, signal h),
— un régénérateur pour le rythme de données (figure 3, signal g);

et le circuit (8) qui est relié récepteur (5) comportant les unités suivantes:

— un circuit générateur de fréquence constitué par un oscillateur commandable (14) pour produire un signal de rythme avec la fréquence de rythme $f_1$, par un premier diviseur (15) possédant un rapport de division constant pour produire un premier signal de rythme (figure 3, signal i) avec la fréquence de rythme $f_2$, par un second diviseur (16) possédant un rapport de division commandable pour produire un second signal de rythme (figure 3, signal k) avec la fréquence de rythme $f_3$, la fréquence de rythme $f_2$ correspondant à la fréquence de rythme plus élevée $f_A$ et la fréquence de rythme $f_3$ correspondant à la fréquence de rythme $f_D$, et la fréquence de rythme $f_1$ correspondant au plus petit commun multiple de la fréquence de rythme de données ($f_D$) et de la fréquence ($f_A$) du signal d'échantillonnage, ainsi que par un premier comparateur de phase (13) pour la comparaison du rythme de données (figure 3, signal g) avec le premier signal de cadence (figure 3, signal i) pour produire un signal de commande pour l'oscillateur (14),
— une entrée de commande (21) du second diviseur (16) pour l'application de signaux de commande, sur la base desquels la longueur de segments de rythme individuels du second signal de rythme avec la fréquence $f_3$ peut respectivement être modifiée d'une valeur fixe,
— un circuit de sortie (28) dans lequel le second signal de rythme échantillonne les échantillons régénérés (figure 3, signal f) et à la sortie (9) duquel le signal de données régénéré peut être prélevé lors d'une position de phase d'échantillonnage correcte; caractérisé
— par un échantillonneur (22), relié aux sorties des diviseurs (15, 16), qui échantillonne le second signal de rythme (figure 3, signal k) au moyen du premier signal de rythme (figure 3, signal i), grâce à quoi il apparaît à la sortie (23) un signal de modèle (figure 3, signal m) dont un des flancs indique les instants auxquels on doit s'attendre à des transitions entre données des échantillons,
— par un second comparateur de phase (25) dont une entrée (23) est reliée à l'échantillonneur (22), dont la seconde entrée (11) est reliée au détecteur pour déterminer les transitions entre données des échantillons et dont la sortie (20) est reliée à au moins une entrée de commande (21) du second diviseur (16), et qui contrôle de façon continue, à l'intérieur d'une gamme de phase prédéterminée, si les transitions entre données des échantillons (figure 3, signal k) apparaissent en phase avec les flancs du signal de modèle (figure 3, signal m) et qui délivre un signal de commande au second diviseur (16) lors de chaque déphasage.

2. Circuit suivant la revendication 1, caractérisé en ce que le second diviseur (16) est un compteur dont la valeur de comptage finale peut varier de 1.

3. Circuit suivant la revendication 1, caractérisé en ce que l'échantillonneur (22) est une bascule flip-flop de type D.

4. Circuit suivant la revendication 1, caractérisé en ce que le comparateur de phase (25) délivre un premier signal de commande sur une entrée de commande (21) du second diviseur lors de l'apparition d'un déphasage dans un sens, et un second signal de commande lors de l'apparition d'un déphasage dans l'autre sens.

5. Circuit suivant la revendication 1, caractérisé en ce que le comparateur de phase (25) délivre un premier signal de commande sur une première entrée de commande lors de l'apparition d'un déphasage dans un des sens et un second signal de commande sur une seconde entrée de commande du second diviseur (16) lors de l'apparition d'un déphasage dans l'autre sens.

6. Circuit suivant la revendication 1, caractérisé en ce que le comparateur de phase (25) enregistre des déphasages à l'intérieur d'une gamme de phase qui correspond à une longueur de base (1/$f_D$) du rythme de données ($f_D$).

7. Circuit suivant la revendication 1, caractérisé en ce qu'entre la sortie (20) du comparateur de phase (25) et l'entrée de commande (21) du second diviseur (16) est inséré un filtre de séquences (27) qui ne transmet pas des signaux de commande isolés et qui transmet des signaux de commande apparaissant plusieurs fois à l'intérieur d'un intervalle de temps prédéterminé.

Fig·1

Fig. 2

Fig. 3